# EUROPEAN PATENT APPLICATION

(11) **EP 3 825 815 A1**
(43) Date of publication of application: **26.05.2021**
(21) Application number: 20176826.4
(22) Date of filing: 27.05.2020
(51) Int. Cl.: G06F 1/26

(54) **METHOD AND DEVICE FOR SUPPLYING POWER TO ELECTRONIC DEVICE, AND COMPUTER-READABLE STORAGE MEDIUM**

(30) Priority: 22.11.2019 CN 201911154461
(71) Applicant: Beijing Xiaomi Mobile Software Co., Ltd., Beijing 100085 (CN)
(72) Inventor: GUO, Rui, Beijing, 100085 (CN); WANG, Xiaolong, Beijing, 100085 (CN)
(74) Representative: Gevers Patents

(57) **Abstract**

The disclosure relates to a method and device for supplying power to an electronic device, and a storage medium. The method includes: detecting, by a power control device of the electronic device, whether a core component of the electronic device is in an acceleration mode; when detecting that a core component of the electronic device is in the acceleration mode, determining a target current required by the core component; and if the target current is greater than a maximum rated current of the power adapter, controlling the power adapter and a battery of the electronic device to jointly supply power to the core component.

## Description

### CROSS-REFERENCE TO RELATED APPLICATIONS

This application is filed based upon and claims the priority of Chinese patent application No. 201911154461.3, filed on November 22, 2019.

### TECHNICAL FIELD

The disclosure relates to the technical field of terminals, and more particularly, to a method and device for supplying power to an electronic device, and a computer-readable storage medium.

### BACKGROUND

In terminal devices such as a laptop, in order to make a Central Processing Unit (CPU)/Graphics Processing Unit (GPU) have better performance, a Turbo Boost mode is usually provided. The CPU/GPU has a corresponding continue power and peak power in a turbo mode. The peak power is characterized in that a power value is much greater than the continue power, but lasts for a short duration time. For such power design, the power of an Alternating Current (AC) adapter is greater than the sum of the peak powers of the CPU and the GPU to ensure the normal operation of a system. However, the cost of such adapter can be greatly increased.

### SUMMARY

To overcome the problems existing in the related art, embodiments of the disclosure provide a method and device for supplying power to an electronic device, and a computer-readable storage medium, which are used for solving the defects in the related art.

According to a first aspect of the embodiments of the disclosure, a method for supplying power to an electronic device is provided. The method may include: detecting, by a power control device of the electronic device, whether a core component of the electronic device is in an acceleration mode; determining a target current required by the core component of an electronic device, when detecting that a core component of the electronic device is in the acceleration mode; and controlling a power adapter and a battery of the electronic device to jointly supply power to the core component, when the target current is greater than a maximum rated current of the power adapter.

According to a second aspect of the embodiments of the disclosure, a device for supplying power to an electronic device is provided. The device may include: a current determination module, configured to detect whether a core component of the electronic device is in an acceleration mode and determine a target current required by the core component of an electronic device when it is detected that the core component of the electronic device is in the acceleration mode; and a power supply control module, configured to control a power adapter and a battery of the electronic device to jointly supply power to the core component when the target current is greater than a maximum rated current of the power adapter.

According to a third aspect of the embodiments of the disclosure, a computer-readable storage medium is provided. A computer program may be stored thereon. The program may be executed by a processor to implement the following operations: detecting whether a core component of the electronic device is in an acceleration mode; determining a target current required by the core component of an electronic device, when detecting that a core component of the electronic device is in the acceleration mode; and controlling a power adapter and a battery of the electronic device to jointly supply power to the core component, when the target current is greater than a maximum rated current of the power adapter.

The technical solutions provided by the embodiments of the disclosure may include the following beneficial effects.

In the disclosure, when it is detected that a core component of an electronic device is in an acceleration mode, a target current required by the core component is determined. When the target current is greater than a current capable of being provided by a power adapter of the electronic device, the power adapter and a battery of the electronic device are controlled to jointly supply power to the core component. When it is determined that the core component is in the acceleration mode and the required target current is greater than the current capable of being provided by the power adapter, the battery and the power adapter of the electronic device jointly supply power to the core component. Therefore, in the case of ensuring the normal operation of a system, the design power of the power adapter can be reduced. That is, it is not necessary to design the power of the power adapter as the sum of peak powers of the core components, thereby reducing the cost of the power adapter.

It is to be understood that the above general descriptions and detailed descriptions below are only exemplary and explanatory and not intended to limit the disclosure.

### BRIEF DESCRIPTION OF THE DRAWINGS

The accompanying drawings, which are incorporated in and constitute a part of this specification, illustrate embodiments consistent with the disclosure and, together with the specification, serve to explain the principles of the disclosure.
Fig. 1 illustrates a flowchart of a method for supplying power to an electronic device, according to a first exemplary embodiment.
Fig. 2 illustrates a flowchart of a method for supplying power to an electronic device, according to a second exemplary embodiment.
Fig. 3 illustrates a flowchart of a method for supplying power to an electronic device, according to a third exemplary embodiment.
Fig. 4 illustrates a flowchart of a method for supplying power to an electronic device, according to a fourth exemplary embodiment.
Fig. 5 illustrates a flowchart of a method for supplying power to an electronic device, according to a fifth exemplary embodiment.
Fig. 6 illustrates a block diagram of a device for supplying power to an electronic device, according to an exemplary embodiment.
Fig. 7 illustrates a block diagram of a device for supplying power to an electronic device, according to an exemplary embodiment.
Fig. 8 illustrates a block diagram of a smart device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of devices and methods consistent with aspects related to the disclosure as recited in the appended claims.

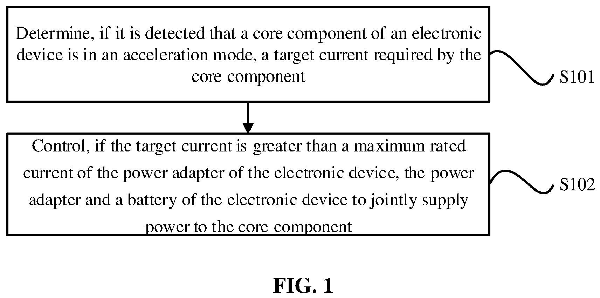

Fig. 1 illustrates a flowchart of a method for supplying power to an electronic device, according to a first exemplary embodiment. The method for supplying power to an electronic device may be applied to a power control device (such as a power management chip EC) for an electronic device such as a laptop. As shown in Fig. 1, the method for supplying power to an electronic device includes operations S101-S102.

In operation S 101, if it is detected that a core component of an electronic device is in an acceleration mode, a target current required by the core component is determined.

For example, when the electronic device is running, a working mode of the core component of the electronic device may be detected in real-time. When it is detected that the core component of the electronic device is in an acceleration mode, a target current currently required by the core component may be determined.

In this embodiment, the core component may include a CPU and/or a GPU of an electronic device. Accordingly, the acceleration mode may include a Turbo Boost mode of the core component.

In operation S 102, if the target current is greater than a current capable of being provided by a power adapter of the electronic device, the power adapter and a battery of the electronic device are controlled to jointly supply power to the core component.

In this embodiment, after determining the target current required by the core component of the electronic device, the target current may be compared with the current capable of being provided by the power adapter. Further, if it is determined that the target current is greater than the current capable of being provided by the power adapter of the electronic device, the battery and power adapter of the electronic device may be controlled to jointly supply power to the core component.

For example, the current capable of being provided by the power adapter may include an output current of the power adapter. The output current may be used to characterize a maximum output capacity of the adapter, that is, a power supply capacity of the adapter.

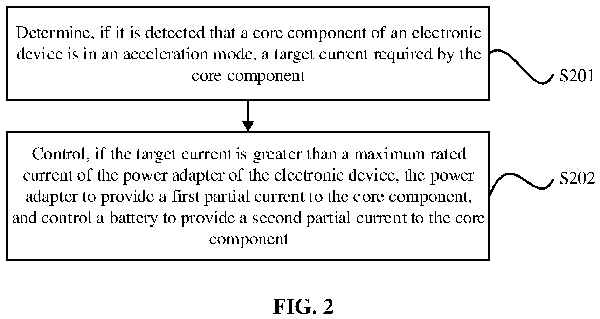

In one embodiment, the operation of controlling the power adapter and the battery of the electronic device to jointly supply power to the core component may also refer to the embodiment shown in Fig. 2 below. Detailed descriptions are omitted herein.

It can be known from the foregoing description that in this embodiment, when it is detected that a core component of an electronic device is in an acceleration mode, a target current required by the core component is determined. When the target current is greater than a current capable of being provided by a power adapter of the electronic device, the power adapter and a battery of the electronic device are controlled to jointly supply power to the core component. When it is determined that the core component is in the acceleration mode and the required target current is greater than the current capable of being provided by the power adapter, the battery and the power adapter of the electronic device jointly supply power to the core component. Therefore, in the case of ensuring the normal operation of a system, the design power of the power adapter can be reduced. That is, it is not necessary to design the power of the power adapter as the sum of peak powers of the core components, thereby reducing the cost of the power adapter.

Fig. 2 illustrates a flowchart of a method for supplying power to an electronic device, according to a second exemplary embodiment. The method for supplying power to an electronic device may be applied to a power control device (such as a power management chip EC) for an electronic device such as a laptop. As shown in Fig. 2, the method for supplying power to an electronic device includes operations S201-S202.

In operation S201, if it is detected that a core component of an electronic device is in an acceleration mode, a target current required by the core component is determined.

For related explanation and description of operation S201, reference may be made to the above embodiments. Detailed descriptions are omitted herein.

In operation S202, a power adapter is controlled to provide a first partial current to the core component, and the battery is controlled to provide a second partial current to the core component. The second partial current is a difference between the target current and the first partial current.

In this embodiment, after determining a target current required by the core component of the electronic device, the target current may be compared with the current capable of being provided by the power adapter. Further, if it is determined that the target current is greater than the maximum rated current of the power adapter, a difference between the target current and the first partial current may be calculated. Based on this, the power adapter may be controlled to provide a first partial current to the core component, and the battery may be controlled to provide a second partial current to the core component. The second partial current is the calculated difference between the target current and the first partial current.

For example, the current capable of being provided by the power adapter may include an output current of the power adapter. The output current may be used to characterize a maximum output capacity of the adapter, that is, a power supply capacity of the adapter.

It can be known from the foregoing description that in this embodiment, when it is detected that a core component of an electronic device is in an acceleration mode, a target current required by the core component is determined. When the target current is greater than a current capable of being provided by a power adapter of the electronic device, the power adapter is controlled to provide a first partial current to the core component, and a battery is controlled to provide a second partial current to the core component. When it is determined that the core component is in the acceleration mode and the required target current is greater than the current capable of being provided by the power adapter, the battery and the power adapter of the electronic device provide partial currents to the core component respectively. Therefore, in the case of ensuring the normal operation of a system, the design power of the power adapter can be reduced. That is, it is not necessary to design the power of the power adapter as the sum of peak powers of the core components, thereby reducing the cost of the power adapter.

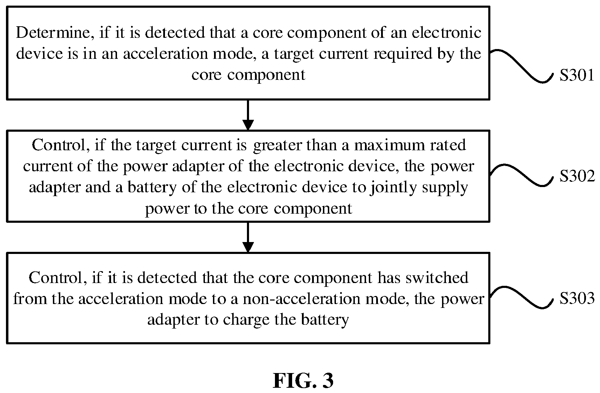

Fig. 3 illustrates a flowchart of a method for supplying power to an electronic device, according to a third exemplary embodiment. The method for supplying power to an electronic device may be applied to a power control device (such as a power management chip EC) for an electronic device such as a laptop. As shown in Fig. 3, the method for supplying power to an electronic device includes operations S301-S303.

In operation S301, if it is detected that a core component of an electronic device is in an acceleration mode, a target current required by the core component is determined.

In operation S302, if the target current is greater than a current capable of being provided by a power adapter of the electronic device, the power adapter and a battery of the electronic device are controlled to jointly supply power to the core component.

For related explanation and description of operations S301-S302, reference may be made to the above embodiments. Detailed descriptions are omitted herein.

In operation S303, if it is detected that the core component has switched from the acceleration mode to a non-acceleration mode, the power adapter is controlled to charge the battery.

In this embodiment, in the process of controlling the power adapter and the battery of the electronic device to jointly supply power to the core component, if it is detected that the core component has switched from the acceleration mode to a non-acceleration mode, the power adapter may be controlled to charge the battery until the battery is fully charged.

For example, in the process of controlling the power adapter and the battery of the electronic device to jointly supply power to the core component, if it is detected that the core component has switched from the acceleration mode to a non-acceleration mode, the power adapter may be controlled to separately supply power to the core component, and the current power of the battery may be detected, so that the battery may be charged when the battery is not fully charged.

It can be known from the foregoing description that in this embodiment, when it is detected that a core component of an electronic device is in an acceleration mode, a target current required by the core component is determined. When the target current is greater than a current capable of being provided by a power adapter of the electronic device, the power adapter and a battery of the electronic device are controlled to jointly supply power to the core component, and when it is detected that the core component has switched from the acceleration mode to a non-acceleration mode, the power adapter is controlled to charge the battery, so that a battery of a laptop may be utilized to participate in power supply, and the battery may be supplemented with power in time. When it is determined that the core component is in the acceleration mode and the required target current is greater than the current capable of being provided by the power adapter, the battery and the power adapter of the electronic device jointly supply power to the core component. Therefore, in the case of ensuring the normal operation of a system, the design power of the power adapter is reduced, thereby reducing the cost of the power adapter.

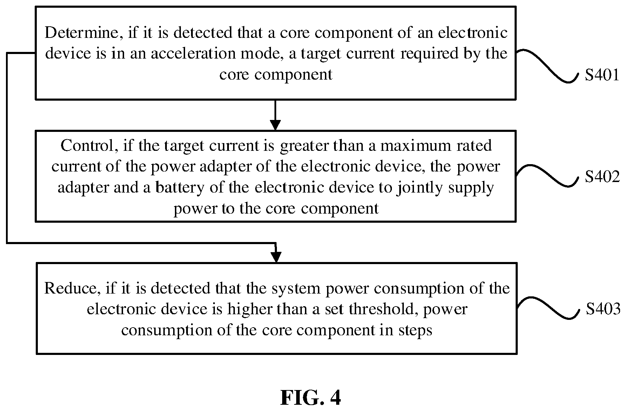

Fig. 4 illustrates a flowchart of a method for supplying power to an electronic device, according to a fourth exemplary embodiment. The method for supplying power to an electronic device may be applied to a power control device (such as a power management chip EC) for an electronic device such as a laptop. As shown in Fig. 4, the method for supplying power to an electronic device includes operations S401-S403.

In operation S401, if it is detected that a core component of an electronic device is in an acceleration mode, a target current required by the core component is determined.

In operation S402, if the target current is greater than a current capable of being provided by a power adapter of the electronic device, the power adapter and a battery of the electronic device are controlled to jointly supply power to the core component.

For related explanation and description of operations S401 -S402, reference may be made to the above embodiments. Detailed descriptions are omitted herein.

In operation S403, if it is detected that the system power consumption of the electronic device is higher than a set threshold, the power consumption of the core component is reduced in a step form. The set threshold is related to the maximum rated power consumption of the power adapter.

In this embodiment, in the process of controlling the battery of the electronic device and the power adapter to jointly supply power to the core component, in order to protect the power adapter, the system power consumption of the electronic device may be detected in real-time. Thus, when it is detected that the system power consumption of the electronic device is higher than a set threshold, the power consumption of the core components is reduced in a step form, thereby achieving the purpose of reducing the system power consumption. In this way, the power adapter may be protected in terms of system power consumption.

It should be noted that the above-set threshold may be set by a developer according to business needs or experience, such as 80% of the maximum rated power consumption of the power adapter, which is not limited in this embodiment.

It can be known from the foregoing description that in this embodiment, when it is detected that a core component of an electronic device is in an acceleration mode, a target current required by the core component is determined. When the target current is greater than a current capable of being provided by a power adapter of the electronic device, the power adapter and a battery of the electronic device are controlled to jointly supply power to the core component, and when it is detected that the system power consumption of the electronic device is higher than a set threshold, the power consumption of the core component is reduced in a step form, a battery of a laptop may be utilized to participate in power supply, and the safety of the power adapter may be ensured. When it is determined that the core component is in the acceleration mode and the required target current is greater than the current capable of being provided by the power adapter, the battery and the power adapter of the electronic device jointly supply power to the core component. Therefore, in the case of ensuring the normal operation of a system, the design power of the power adapter is reduced, thereby reducing the cost of the power adapter.

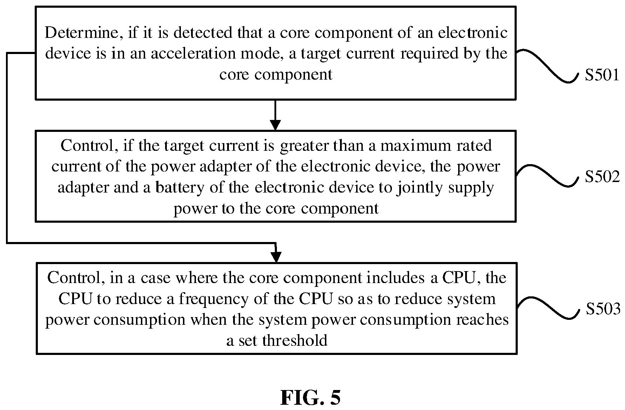

Fig. 5 illustrates a flowchart of a method for supplying power to an electronic device, according to a fifth exemplary embodiment. The method for supplying power to an electronic device may be applied to a power control device (such as a power management chip EC) for an electronic device such as a laptop. As shown in Fig. 5, the method for supplying power to an electronic device includes operations S501-S503.

In operation S501, if it is detected that a core component of an electronic device is in an acceleration mode, a target current required by the core component is determined.

In operation S502, if the target current is greater than a current capable of being provided by a power adapter of the electronic device, the power adapter and a battery of the electronic device are controlled to jointly supply power to the core component.

For related explanation and description of operations S501-S502, reference may be made to the above embodiments. Detailed descriptions are omitted herein.

In operation S503, in a case where the core component includes a CPU, the CPU is controlled to reduce the frequency of the CPU to reduce the system power consumption when the system power consumption reaches a set threshold.

In this embodiment, in the process of controlling the power adapter and the battery of the electronic device to jointly supply power to the CPU, in order to protect the power adapter, the system power consumption of the electronic device may be detected in real-time. Thus, when it is detected that the system power consumption of the electronic device is higher than a set threshold, the frequency of the CPU is reduced, thereby achieving the purpose of reducing the system power consumption. In this way, the power adapter may be protected in terms of system power consumption.

It should be noted that the above-set threshold may be set by a developer according to business needs or experience, such as 80% of the maximum rated power consumption of the power adapter, which is not limited in this embodiment.

In one embodiment, the power adapter may be protected by introducing a Platform power limit setting mode. That is, when the system power consumption reaches the above-set threshold, the CPU will automatically reduce the frequency of the CPU to reduce the overall power consumption, thereby achieving a protection mechanism of the power adapter.

It can be known from the foregoing description that in this embodiment, when it is detected that a core component of an electronic device is in an acceleration mode, a target current required by the core component is determined. When the target current is greater than a current capable of being provided by a power adapter of the electronic device, the power adapter and a battery of the electronic device are controlled to jointly supply power to the core component. In a case where the core component includes a CPU, the CPU is controlled to reduce the frequency of the CPU so as to reduce the system power consumption when the system power consumption reaches a set threshold, a battery of a laptop may be utilized to participate in power supply, and the safety of the power adapter may be ensured. When it is determined that the core component is in the acceleration mode and the required target current is greater than the current capable of being provided by the power adapter, the battery and the power adapter of the electronic device jointly supply power to the core component. Therefore, in the case of ensuring the normal operation of a system, the design power of the power adapter is reduced, thereby reducing the cost of the power adapter.

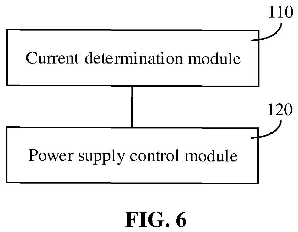

Fig. 6 illustrates a block diagram of a device for supplying power to an electronic device, according to an exemplary embodiment. As shown in Fig. 6, the device includes: a current determination module 110 and a power supply control module 120.

The current determination module 110 is configured to determine, when it is detected that a core component of an electronic device is in an acceleration mode, a target current required by the core component.

The power supply control module 120 is configured to control, when the target current is greater than a current capable of being provided by a power adapter of the electronic device, the power adapter and a battery of the electronic device to jointly supply power to the core component.

It can be known from the foregoing description that in this embodiment, when it is detected that a core component of an electronic device is in an acceleration mode, a target current required by the core component is determined. When the target current is greater than a current capable of being provided by a power adapter of the electronic device, the power adapter and a battery of the electronic device are controlled to jointly supply power to the core component. When it is determined that the core component is in the acceleration mode and the required target current is greater than the current capable of being provided by the power adapter, the battery and the power adapter of the electronic device jointly supply power to the core component. Therefore, in the case of ensuring the normal operation of a system, the design power of the power adapter can be reduced. That is, it is not necessary to design the power of the power adapter as the sum of peak powers of the core components, thereby reducing the cost of the power adapter.

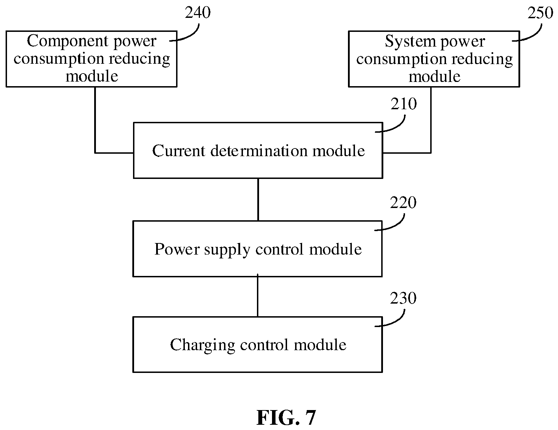

Fig. 7 illustrates a block diagram of another device for supplying power to an electronic device, according to an exemplary embodiment. Functions of the current determination module 210 and the power supply control module 220 are the same as those of the current determination module 110 and the power supply control module 120 in the embodiment shown in Fig. 6 described above. Detailed descriptions are omitted herein. As shown in Fig. 7, the power supply control module 220 may be further configured to control the power adapter to provide a first partial current to the core component, and control the battery to provide a second partial current to the core component. The second partial current is a difference between the target current and the first partial current.

In one embodiment, the device may further include a charging control module 230.

The charging control module 230 is configured to control, when it is detected that the core component has switched from the acceleration mode to a non-acceleration mode, the power adapter to charge the battery.

In one embodiment, the device may further include a component power consumption reducing module 240.

The component power consumption reducing module 240 is configured to reduce, when it is detected that the system power consumption of the electronic device is higher than a set threshold, the power consumption of the core component in a step form, the set threshold is related to the maximum rated power consumption of the power adapter.

In one embodiment, the core component includes a CPU and/or a GPU, and the acceleration mode may include a Turbo Boost mode.

In one embodiment, the device may further include a system power consumption reducing module 250.

The system power consumption reducing module 250 is configured to control, in a case where the core component includes a CPU, the CPU to reduce the frequency of the CPU so as to reduce the system power consumption when the system power consumption reaches a set threshold.

Regarding the device in the above embodiment, the specific manner in which each module performs operations has been described in detail in the embodiment about the method, and detailed descriptions are omitted herein.

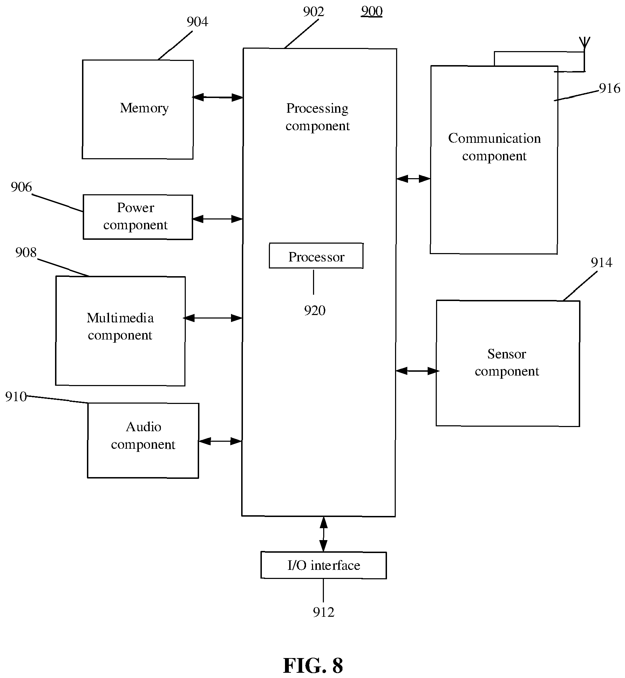

Fig. 8 illustrates a block diagram of an electronic device, according to an exemplary embodiment. For example, the device 900 may be a mobile phone, a computer, a digital broadcast terminal, a messaging device, a gaming console, a tablet, a medical device, exercise equipment, a personal digital assistant, and the like.

Referring to Fig. 8, the device 900 may include one or more of the following components: a processing component 902, a memory 904, a power component 906, a multimedia component 908, an audio component 910, an Input/Output (I/O) interface 912, a sensor component 914, and a communication component 916.

The processing component 902 typically controls overall operations of the device 900, such as operations associated with display, telephone calls, data communications, camera operations, and recording operations. The processing component 902 may include one or more processors 920 to execute instructions to perform all or part of the operations in the above described methods. Moreover, the processing component 902 may include one or more modules which facilitate the interaction between the processing component 902 and other components. For example, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power component 906 provides power to various components of the device 900. The power component 906 may include a power management system, one or more power sources, and any other components associated with the generation, management and distribution of power in the device 900.

The multimedia component 908 includes a screen providing an output interface between the device 900 and the user. In some embodiments, the screen may include a Liquid Crystal Display (LCD) and a Touch Panel (TP). If the screen includes the TP, the screen may be implemented as a touch screen to receive input signals from the user. The TP includes one or more touch sensors to sense touches, swipes, and gestures on the TP. The touch sensors may not only sense a boundary of a touch or swipe action, but also sense a period of time and a pressure associated with the touch or swipe action. In some embodiments, the multimedia component 908 includes a front camera and/or a rear camera. The front camera and/or the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a Microphone (MIC) configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, or buttons. The buttons may include, but are not limited to, a home button, a volume button, a starting button, and a locking button.

The sensor component 914 includes one or more sensors to provide status assessments of various aspects of the device 900. For example, the sensor component 914 may detect an open/closed status of the device 900, and relative positioning of components. For example, the component is the display and the keypad of the device 900. The sensor component 914 may also detect a change in position of the device 900 or a component of the device 900, a presence or absence of user contact with the device 900, an orientation or an acceleration/deceleration of the device 900, and a change in temperature of the device 900. The sensor component 914 may further include a proximity sensor configured to detect the presence of nearby objects without any physical contact. The sensor component 914 may also include a light sensor, such as a Complementary Metal Oxide Semiconductor (CMOS) or Charge Coupled Device (CCD) image sensor, for use in imaging applications. In some embodiments, the sensor component 914 may also include an acceleration sensor, a gyroscope sensor, a magnetic sensor, a pressure sensor, or a temperature sensor.

The communication component 916 is configured to facilitate communication, wired or wirelessly, between the device 900 and other devices. The device 900 may access a wireless network based on a communication standard, such as WiFi, 2G or 3G, 4G or 5G, or a combination thereof. In one exemplary embodiment, the communication component 916 receives a broadcast signal or broadcast associated information from an external broadcast management system via a broadcast channel. In one exemplary embodiment, the communication component 916 further includes a Near Field Communication (NFC) module to facilitate short-range communications. For example, the NFC module may be implemented based on a Radio Frequency Identification (RFID) technology, an Infrared Data Association (IrDA) technology, an Ultra-Wideband (UWB) technology, a Bluetooth (BT) technology, and other technologies.

In exemplary embodiments, the device 900 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors, or other electronic elements, for performing the above described method for supplying power to an electronic device.

In exemplary embodiments, there is also provided a non-transitory computer-readable storage medium including instructions, such as included in the memory 904, executable by the processor 920 of the device 900 to complete the above described method for supplying power to an electronic device. For example, the non-transitory computer-readable storage medium may be a ROM, a Random Access Memory (RAM), a Compact Disc Read-Only Memory (CD-ROM), a magnetic tape, a floppy disc, an optical data storage device and the like.

In the present disclosure, the terms "installed," "connected," "coupled," "fixed" and the like shall be understood broadly, and can be either a fixed connection or a detachable connection, or integrated, unless otherwise explicitly defined. These terms can refer to mechanical or electrical connections, or both. Such connections can be direct connections or indirect connections through an intermediate medium. These terms can also refer to the internal connections or the interactions between elements. The specific meanings of the above terms in the present disclosure can be understood by those of ordinary skill in the art on a case-by-case basis.

In the description of the present disclosure, the terms "one embodiment," "some embodiments," "example," "specific example," or "some examples," and the like can indicate a specific feature described in connection with the embodiment or example, a structure, a material or feature included in at least one embodiment or example. In the present disclosure, the schematic representation of the above terms is not necessarily directed to the same embodiment or example.

Moreover, the particular features, structures, materials, or characteristics described can be combined in a suitable manner in any one or more embodiments or examples. In addition, various embodiments or examples described in the specification, as well as features of various embodiments or examples, can be combined and reorganized.

In some embodiments, the control and/or interface software or app can be provided in a form of a non-transitory computer-readable storage medium having instructions stored thereon is further provided. For example, the non-transitory computer-readable storage medium can be a ROM, a CD-ROM, a magnetic tape, a floppy disk, optical data storage equipment, a flash drive such as a USB drive or an SD card, and the like.

Implementations of the subject matter and the operations described in this disclosure can be implemented in digital electronic circuitry, or in computer software, firmware, or hardware, including the structures disclosed herein and their structural equivalents, or in combinations of one or more of them. Implementations of the subject matter described in this disclosure can be implemented as one or more computer programs, i.e., one or more portions of computer program instructions, encoded on one or more computer storage medium for execution by, or to control the operation of, data processing apparatus.

Alternatively, or in addition, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them.

Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, drives, or other storage devices). Accordingly, the computer storage medium can be tangible.

The operations described in this disclosure can be implemented as operations performed by a data processing apparatus on data stored on one or more computer-readable storage devices or received from other sources.

The devices in this disclosure can include special purpose logic circuitry, e.g., an FPGA (field-programmable gate array), or an ASIC (application-specific integrated circuit). The device can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The devices and execution environment can realize various different computing model infrastructures, such as web services, distributed computing, and grid computing infrastructures.

A computer program (also known as a program, software, software application, app, script, or code) can be written in any form of programming language, including compiled or interpreted languages, declarative or procedural languages, and it can be deployed in any form, including as a stand-alone program or as a portion, component, subroutine, object, or other portion suitable for use in a computing environment. A computer program can, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more portions, sub-programs, or portions of code). A computer program can be deployed to be executed on one computer or on multiple computers that are located at one site or distributed across multiple sites and interconnected by a communication network.

The processes and logic flows described in this disclosure can be performed by one or more programmable processors executing one or more computer programs to perform actions by operating on input data and generating output. The processes and logic flows can also be performed by, and apparatus can also be implemented as, special purpose logic circuitry, e.g., an FPGA, or an ASIC.

Processors or processing circuits suitable for the execution of a computer program include, by way of example, both general and special purpose microprocessors, and any one or more processors of any kind of digital computer. Generally, a processor will receive instructions and data from a read-only memory, or a random-access memory, or both. Elements of a computer can include a processor configured to perform actions in accordance with instructions and one or more memory devices for storing instructions and data.

Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented with a computer and/or a display device, e.g., a VR/AR device, a head-mount display (HMD) device, a head-up display (HUD) device, smart eyewear (e.g., glasses), a CRT (cathode-ray tube), LCD (liquid-crystal display), OLED (organic light emitting diode), or any other monitor for displaying information to the user and a keyboard, a pointing device, e.g., a mouse, trackball, etc., or a touch screen, touch pad, etc., by which the user can provide input to the computer.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components.

The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination.

Moreover, although features can be described above as acting in certain combinations and even initially claimed as such, one or more features from a claimed combination can in some cases be excised from the combination, and the claimed combination can be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system components in the implementations described above should not be understood as requiring such separation in all implementations, and it should be understood that the described program components and systems can generally be integrated together in a single software product or packaged into multiple software products.

As such, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing can be utilized.

It is intended that the specification and embodiments be considered as examples only. Other embodiments of the disclosure will be apparent to those skilled in the art in view of the specification and drawings of the present disclosure. That is, although specific embodiments have been described above in detail, the description is merely for purposes of illustration. It should be appreciated, therefore, that many aspects described above are not intended as required or essential elements unless explicitly stated otherwise.

Various modifications of, and equivalent acts corresponding to, the disclosed aspects of the example embodiments, in addition to those described above, can be made by a person of ordinary skill in the art, having the benefit of the present disclosure, without departing from the spirit and scope of the disclosure defined in the following claims, the scope of which is to be accorded the broadest interpretation so as to encompass such modifications and equivalent structures.

It should be understood that "a plurality" or "multiple" as referred to herein means two or more. "And/or," describing the association relationship of the associated objects, indicates that there may be three relationships, for example, A and/or B may indicate that there are three cases where A exists separately, A and B exist at the same time, and B exists separately. The character "/" generally indicates that the contextual objects are in an "or" relationship.

In the present disclosure, it is to be understood that the terms "lower," "upper," "under" or "beneath" or "underneath," "above," "front," "back," "left," "right," "top," "bottom," "inner," "outer," "horizontal," "vertical," and other orientation or positional relationships are based on example orientations illustrated in the drawings, and are merely for the convenience of the description of some embodiments, rather than indicating or implying the device or component being constructed and operated in a particular orientation. Therefore, these terms are not to be construed as limiting the scope of the present disclosure.

Moreover, the terms "first" and "second" are used for descriptive purposes only and are not to be construed as indicating or implying a relative importance or implicitly indicating the number of technical features indicated. Thus, elements referred to as "first" and "second" may include one or more of the features either explicitly or implicitly. In the description of the present disclosure, "a plurality" indicates two or more unless specifically defined otherwise.

In the present disclosure, a first element being "on" a second element may indicate direct contact between the first and second elements, without contact, or indirect geometrical relationship through one or more intermediate media or layers, unless otherwise explicitly stated and defined. Similarly, a first element being "under," "underneath" or "beneath" a second element may indicate direct contact between the first and second elements, without contact, or indirect geometrical relationship through one or more intermediate media or layers, unless otherwise explicitly stated and defined.

In the description of the present disclosure, the terms "some embodiments," "example," or "some examples," and the like may indicate a specific feature described in connection with the embodiment or example, a structure, a material or feature included in at least one embodiment or example. In the present disclosure, the schematic representation of the above terms is not necessarily directed to the same embodiment or example.

Moreover, the particular features, structures, materials, or characteristics described may be combined in a suitable manner in any one or more embodiments or examples. In addition, various embodiments or examples described in the specification, as well as features of various embodiments or examples, may be combined and reorganized.

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombinations.

Moreover, although features can be described above as acting in certain combinations and even initially claimed as such, one or more features from a claimed combination can in some cases be excised from the combination, and the claimed combination can be directed to a subcombination or variations of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system components in the implementations described above should not be understood as requiring such separation in all implementations, and it should be understood that the described program components and systems can generally be integrated together in a single software product or packaged into multiple software products.

As such, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing can be utilized.

Some other embodiments of the present disclosure can be available to those skilled in the art upon consideration of the specification and practice of the various embodiments disclosed herein. The present application is intended to cover any variations, uses, or adaptations of the present disclosure following general principles of the present disclosure and include the common general knowledge or conventional technical means in the art without departing from the present disclosure. The specification and examples can be shown as illustrative only, and the true scope and spirit of the disclosure are indicated by the following claims.

## Claims

1. A method for supplying power to an electronic device, **characterized by** the method comprising:
detecting (S 101), by a power control device of the electronic device, whether a core component of the electronic device is in an acceleration mode;
determining (S 101) a target current required by the core component of the electronic device when it is detected that the core component of the electronic device is in the acceleration mode; and
controlling (S 102) a power adapter and a battery of the electronic device to jointly supply power to the core component when the target current is greater than a maximum rated current of the power adapter.

2. The method according to claim 1, wherein controlling, by the power control device, the power adapter and the battery of the electronic device to jointly supply power to the core component further comprises:
controlling the power adapter to provide a first partial current to the core component; and
controlling the battery to provide a second partial current to the core component, the second partial current being a difference between the target current and the first partial current.

3. The method according to claim 1, further comprising:
controlling the power adapter to charge the battery when it is detected that the core component has switched from the acceleration mode to a non-acceleration mode.

4. The method according to claim 1, further comprising:
reducing power consumption of the core component in steps, when detecting that system power consumption of the electronic device is higher than a set threshold, the set threshold being related to a maximum rated power consumption of the power adapter.

5. The method according to claim 1, wherein the core component comprises at least one of a Central Processing Unit, CPU, or a Graphics Processing Unit, GPU, and the acceleration mode comprises a Turbo Boost mode.

6. The method according to claim 1, wherein the core component comprises a Central Processing Unit, CPU, and the method further comprises:
controlling the CPU to reduce a frequency of the CPU so as to reduce system power consumption when the system power consumption reaches a set threshold.

7. A device for supplying power to an electronic device, **characterized by** the device comprising:
a current determination module (110), configured to detect whether a core component of the electronic device is in an acceleration mode and determine a target current required by the core component of an electronic device when it is detected that the core component of the electronic device is in the acceleration mode; and
a power supply control module (120), configured to control a power adapter and a battery of the electronic device to jointly supply power to the core component when the target current is greater than a maximum rated current of the power adapter.

8. The device according to claim 7, wherein the power supply control module is further configured to control the power adapter to provide a first partial current to the core component, and control the battery to provide a second partial current to the core component, the second partial current being a difference between the target current and the first partial current.

9. The device according to claim 7, further comprising:
a charging control module (230), configured to control the power adapter to charge the battery when it is detected that the core component is switched from the acceleration mode to a non-acceleration mode.

10. The device according to claim 7, further comprising:
a component power consumption reducing module (240), configured to reduce power consumption of the core component in steps when it is detected that system power consumption of the electronic device is higher than a set threshold,, the set threshold being related to a maximum rated power consumption of the power adapter.

11. The device according to claim 7, wherein the core component comprises at least one of a Central Processing Unit, CPU, or a Graphics Processing Unit, GPU, and the acceleration mode comprises a Turbo Boost mode.

12. The device according to claim 11, wherein the core component comprises a Central Processing Unit, CPU, and the device further comprises:
a system power consumption reducing module (250), configured to control the CPU to reduce a frequency of the CPU so as to reduce system power consumption when the system power consumption reaches a set threshold.

13. A computer-readable storage medium, having a computer program stored thereon, wherein the program, when executed by a processor, performs the following operations:
detecting whether a core component of the electronic device is in an acceleration mode;
determining a target current required by the core component of the electronic device when detecting that the core component of the electronic device is in the acceleration mode; and
controlling a power adapter and a battery of the electronic device to jointly supply power to the core component when the target current is greater than a maximum rated current of the power adapter.

14. The computer-readable storage medium according to claim 13, wherein the program, when executed by the processor, performs the following operation: controlling the power adapter to provide a first partial current to the core component, and controlling the battery to provide a second partial current to the core component, the second partial current being a difference between the target current and the first partial current.

15. The computer-readable storage medium according to claim 13, wherein the program, when executed by the processor, performs the following operation: controlling the power adapter to charge the battery when detecting that the core component has switched from the acceleration mode to a non-acceleration mode.
